# EUROPÄISCHE PATENTANMELDUNG

(11) **EP 2 581 256 A2**
(43) Veröffentlichungstag der Anmeldung: **17.04.2013**
(21) Anmeldenummer: 12182166.4
(22) Anmeldetag: 29.08.2012
(51) Int. Cl.: B60L 11/18

(54) **Ladeinfrastruktur für Elektrofahrzeuge**

(30) Priorität: 14.10.2011 DE 102011084527
(71) Anmelder: Siemens Aktiengesellschaft, 80333 München (DE)
(72) Erfinder: Hegmann, Michael, 91052 Erlangen (DE); Mundry, Alexander, 94491 Hengersberg (DE)

(57) **Zusammenfassung**

Die Erfindung betrifft eine Steuereinrichtung, die mit dem Elektrofahrzeug kommuniziert, und ein Ladekabel mit einem elektrischen Stecker zum Anschluss an ein elektrisches Stromnetz. Im Stecker ist ein Temperatursensor vorgesehen, der in Verbindung mit der Steuereinrichtung steht, die derart ausgestaltet ist, dass bei erreichen einer ersten Temperatur im Stecker ein Signal an das Elektrofahrzeug kommuniziert wird, so dass das Elektrofahrzeug den Ladestrom reduziert.

## Beschreibung

Auf dem neuen Gebiet der Elektromobilität werden neue Anforderungen an die Ladeinfrastruktur, welche auch als Electric Road Vehicle Supply Equipment, kurz EVSE, bezeichnet wird, gestellt. Die Ladeinfrastruktur bzw. EVSE bildet die Schnittstelle zwischen dem neuen Verbraucher Elektrofahrzeug und der altbekannten Elektroinstallation. Eine Forderung besteht in möglichst kurzen Ladezeiten für das Elektrofahrzeug, was zwangsläufig zu hohen Ladeströmen über die relativ große Ladezeit führt. Dies stellt für die bestehende Elektroinstallation, insbesondere für die Leitungen und Steckdosen, eine neue Herausforderung dar.

Die Aufgabe der vorliegenden Erfindung besteht darin eine Lösung anzugeben, die ein Elektrofahrzeug in kurzer Zeit mit möglichst großem Strom lädt und gleichzeitig die Elektroinstallation bzw. Ladeinfrastruktur beim Laden des elektrischen Fahrzeugs nicht irreversibel beschädigt, also eine möglichst große Ladegeschwindigkeit erzielt.

Diese Aufgabe wird durch die Ladeinfrastruktur für ein Elektrofahrzeug gemäß Patentanspruch 1 bzw. ein Verfahren gemäß Patentanspruch 8 gelöst.

Der Kern der erfindungsgemäßen Idee besteht darin, an den elektrischen Steckern bzw. Steckverbindern einen Temperatursensor vorzusehen, der die Temperatur des Steckers überwacht und bei erhöhter Temperatur über eine Steuerung eine Verminderung des Ladestromes veranlasst. Dies hat den Vorteil, dass je nach elektrischem Übergangswiderstand am Stecker bzw. Steckverbinder ein maximaler Ladestrom fließen kann, ohne die Steckverbindung temporär oder dauerhaft thermisch zu beschädigen.

Die Ladeinfrastruktur für ein Elektrofahrzeug weist ein Ladekabel auf, dass zum ersten einen Stecker für die Stromversorgung mit dem elektrischen Stromnetz bzw. der Elektroinstallation umfasst, zum zweiten eine Steuereinrichtung, auch als In Cable Control Box, kurz ICCB, bezeichnet, aufweist und zum dritten andererseits mit dem Elektrofahrzeug verbunden ist.

Die Steuereinrichtung kommuniziert mit dem Elektrofahrzeug und kann dem Elektrofahrzeug über ein Signal bzw. Protokoll einen Ladestrom mitteilen, den das Elektrofahrzeug entsprechend einstellt.

Erfindungsgemäß befindet sich im Stecker, der mit dem elektrischen Stromnetz bzw. der Elektroinstallation verbunden ist, ein Temperatursensor, der die Temperatur des elektrischen Steckers überwacht. Der Temperatursensor steht hierbei in Verbindung mit der Steuereinrichtung. Diese ist derart ausgestaltet, dass bei erreichen einer bestimmten Temperatur im Stecker ein Signal an das Elektrofahrzeug kommuniziert wird, so dass das Elektrofahrzeug den Ladestrom reduziert.

Vorteilhafte Ausgestaltungen der Erfindung sind in den Unteransprüchen angegeben.

In einer vorteilhaften Ausgestaltung der Erfindung, bei der die Steuereinrichtung bei erreichen einer ersten Temperatur im Stecker eine erste reduzierte maximal mögliche Ladestromstärke an das Elektrofahrzeug kommuniziert, wird die Ladestromstärke begrenzt, so dass eine bestimmte Temperatur nicht überschritten wird, da ab einer bestimmten Temperatur davon auszugehen ist, das irreversible Beschädigungen der Elektroinstallation auftreten.

In einer vorteilhaften Ausgestaltung der Erfindung, bei der die Steuereinrichtung bei erreichen einer zweiten Temperatur im Stecker den Ladevorgang unterbricht, wird eine generelle Beschädigung bzw. ein Fehler durch Übertemperatur vermieden. In einer vorteilhaften Ausgestaltung der Erfindung, bei der die Steuereinrichtung bei erreichen der ersten Temperatur im Stecker mittels des Signals an das Elektrofahrzeug den Ladestrom schrittweise mit steigender Temperatur absenkt, kann eine Anpassung des maximal möglichen Ladestromes abhängig von der Temperaturentwicklung erfolgen, so dass eine minimale Ladezeit erzielt werden kann.

In einer vorteilhaften Ausgestaltung der Erfindung, bei der in der Steuereinrichtung ein weiterer Temperatursensor vorgesehen ist, der eine Temperaturüberwachung analog zu den genannten Ausgestaltungen durchführt, ist eine zusätzliche Überwachung der Steuereinrichtung gegeben.

Ein Ausführungsbeispiel der Erfindung wird im Folgenden beschrieben.

Beim Laden von Elektrofahrzeugen wird die bestehende Elektroinstallation deutlich mehr belastet als bei den meisten anderen, bisher vorhandenen Heimanwendungen. Durch eine Temperaturmessung direkt im Stecker wird über geeignete Algorithmen ein Rückschluss auf die Auswirkung dieser erhöhten Belastung auf die genutzte Elektroinstallation gezogen. Bei einer möglicherweise schädigenden Belastung wird diese reduziert und so eine dauerhafte Schädigung in den meisten Fällen verhindert. Dies ist insbesondere dann ein Vorteil, wenn der Anwender nicht technisch versiert ist oder nicht zu Hause lädt und deshalb die mögliche Belastbarkeit der Elektroinstallation nicht abschätzen kann und folglich mit einer erhöhten Ladestromstärke lädt, um das Elektrofahrzeug wieder schneller zur Verfügung zu haben.

Eine Lösung durch ein manuelles Einstellen der maximal möglichen Ladestromstärke am Elektrofahrzeug bzw. durch einen Lademodus, bei dem eine feste, vorher festgelegte Ladestromstärke vorgesehen ist, beispielsweise in der Steuereinrichtung ist möglich.

Kann der Anwender in einem weiteren Lademodus die maximal mögliche Ladestromstärke am Ladekabel / in der Steuereinheit konfigurieren / am Elektrofahrzeug konfigurieren, kann das Ladekabel bei erhöhter Temperatur in der Steuereinrichtung bzw. ICCB eine reduzierte maximal mögliche Ladestromstärke an das Elektrofahrzeug kommunizieren. Bei extremer Innentemperatur der Steuereinrichtung wird der Ladevorgang zumindest temporär abgebrochen.

Die Steuereinrichtung kann auch als so genannte Wallbox, also als an die Wand montierte Einrichtung realisiert sein, bei der der Anwender die maximal mögliche Ladestromstärke am Elektrofahrzeug konfigurieren kann. Alternativ kann die Wallbox die maximale Ladestromstärke in Abhängigkeit vom eingesteckten Ladekabel festlegen. Ferner kann die Wallbox bei erhöhter Innentemperatur eine reduzierte maximal mögliche Ladestromstärke an das Elektrofahrzeug kommunizieren. Bei extremer Innentemperatur wird der Ladevorgang von der Wallbox zumindest temporär abgebrochen.

Erfindungsgemäß wird, alternativ oder zusätzlich zu den genannten Mechanismen, nun die Temperatur direkt im Stecker überwacht, mit dem das Ladekabel an eine bestehende Elektroinstallation angeschlossen wird. Ab einer bestimmten Temperatur im Stecker ist davon auszugehen, dass die Gefahr einer irreversiblen Beschädigung der Elektroinstallation z.B. Steckdose, Isolierung der Leitungen, usw. gegeben ist. In diesem Fall kommuniziert das Ladekabel an das Elektrofahrzeug eine reduzierte maximal mögliche Ladestromstärke. Ab einer bestimmten zweiten Temperatur unterbricht das Ladekabel / die Steuereinrichtung den Ladevorgang, zumindest temporär. Alternativ kann das Ladekabel / die Steuereinrichtung ab einer bestimmten Temperatur im Stecker die maximal mögliche Ladestromstärke schrittweise mit steigender Temperatur absenken.

Die Kommunikation zwischen Steuereinrichtung und Elektrofahrzeug erfolgt über teilweise standardisierte Normen und Protokolle. Bei einigen Protokollen wird zur Kommunikation eine Pulsweitenmodulation, kurz PWM eingesetzt. Über die Pulsweite bzw. den DutyCycle wird der maximal zulässige Ladestrom codiert, d. h. abhängig von der Pulsweite weiß das Elektrofahrzeug, wie hoch der Ladestrom, den es bezieht, maximal sein darf. Natürlich kann das Fahrzeug auch mit kleineren Werten laden.

Als Temperatursensor kann ein NTC-Widerstand vorgesehen werden. Ferner könnten als Temperatursensoren KTY- oder PTC-Sensoren eingesetzt werden.

Die Messung bzw. Auswertung der Temperatur bzw. des Temperaturverlaufs erfolgt vorteilhaft über eine Mittelwertbildung mehrerer Messwerte. Ferner kann eine Plausibilitätskontrolle durchgeführt werden, bei der Ausreißer im Temperaturverlauf unberücksichtigt bleiben. So können Drahtbrüche bzw. defekte Temperatursensoren ermittelt werden bzw. haben keinen Einfluss.

Steigt die Temperatur über bestimmte Grenzwerte / erste bzw. zweite Temperaturwerte, wird der DutyCycle entsprechend angepasst, d. h. die Pulsweite wird reduziert, so dass eine Reduzierung auf 50 % des zuvor max. zulässigen Ladestroms erfolgt. Steigt die Temperatur weiter an und übersteigt sie eine Gefahrgrenze, wird komplett abgeschaltet. Erst wenn die Temperatur wieder unter einen festgelegten Wert sinkt, wird der Ladevorgang wieder aufgenommen / gestartet. In diesem Fall liegt ein hysteresebehaftetes, reversibles Verhalten vor. Dies kann ein autonom arbeitendes System sein.

### Beispiel:

Erste Temperatur = 80 °C ==> Reduzierung auf 50 % des Ladestromes.
Zweite Temperatur = 100 °C ==> Abschalten / Unterbrechen des Ladevorganges.
Dritte Temperatur unter 60 °C ==> Wiedereinschalten des Ladevorganges mit beispielsweise 100 %.

## Patentansprüche

1. Ladeinfrastruktur für ein Elektrofahrzeug, aufweisend eine Steuereinrichtung, die mit dem Elektrofahrzeug kommuniziert, und ein Ladekabel mit einem elektrischem Stecker zum Anschluss an ein elektrisches Stromnetz,
**dadurch gekennzeichnet,**
**dass** im Stecker ein Temperatursensor vorgesehen ist, der in Verbindung mit der Steuereinrichtung steht, die derart ausgestaltet ist, dass bei erreichen einer ersten Temperatur im Stecker ein Signal an das Elektrofahrzeug kommuniziert wird, so dass das Elektrofahrzeug den Ladestrom reduziert.

2. Ladeinfrastruktur nach Anspruch 1,
**dadurch gekennzeichnet,**
**dass** die Steuereinrichtung bei erreichen der ersten Temperatur im Stecker eine erste reduzierte maximal mögliche Ladestromstärke an das Elektrofahrzeug kommuniziert.

3. Ladeinfrastruktur nach Anspruch 1 oder 2,
**dadurch gekennzeichnet,**
**dass** die Steuereinrichtung bei erreichen einer zweiten Temperatur im Stecker den Ladevorgang unterbricht.

4. Ladeinfrastruktur nach Anspruch 1, 2 oder 3,
**dadurch gekennzeichnet,**
**dass** die Steuereinrichtung bei erreichen der ersten Temperatur im Stecker mittels des Signals an das Elektrofahrzeug den Ladestrom schrittweise mit steigender Temperatur absenkt.

5. Ladeinfrastruktur nach einem der vorhergehenden Ansprüche,
**dadurch gekennzeichnet,**
**dass** in der Steuereinrichtung ein weiterer Temperatursensor vorgesehen ist, der eine Temperaturüberwachung analog zu den Ansprüchen 1 bis 4 durchführt.

6. Ladeinfrastruktur nach einem der vorhergehenden Ansprüche,
**dadurch gekennzeichnet,**
**dass** der Temperatursensor ein NTC-Widerstand, KTY- oder PTC-Sensor ist.

7. Ladeinfrastruktur nach einem der vorhergehenden Ansprüche,
**dadurch gekennzeichnet,**
**dass** die Steuereinrichtung bei unterschreiten einer dritten Temperatur eine Aufnahme des Ladevorganges veranlasst.

8. Verfahren zum Laden eines Elektrofahrzeuges mit einem Ladekabel, das eine Steuereinrichtung aufweist, die mit dem Elektrofahrzeug kommuniziert, und einem elektrischen Stecker für den Anschluss an ein elektrisches Stromnetz,
**dadurch gekennzeichnet,**
**dass** im Stecker die Temperatur überwacht wird und bei überschreiten einer ersten Temperatur die Steuereinrichtung ein Signal zum reduzieren des Ladestromes an das Elektrofahrzeug sendet.

9. Verfahren nach Anspruch 8,
**dadurch gekennzeichnet,**
**dass** die Steuereinrichtung bei erreichen der ersten Temperatur im Stecker eine erste reduzierte maximal mögliche Ladestromstärke an das Elektrofahrzeug kommuniziert.

10. Verfahren nach Anspruch 8 oder 9,
**dadurch gekennzeichnet,**
**dass** die Steuereinrichtung bei erreichen einer zweiten Temperatur im Stecker den Ladevorgang unterbricht.

11. Verfahren nach Anspruch 8, 9 oder 10,
**dadurch gekennzeichnet,**
**dass** die Steuereinrichtung bei erreichen der ersten Temperatur im Stecker fortlaufend über das Signal an das Elektrofahrzeug eine schrittweise Ladestromreduzierung bei steigender Temperatur durch das Elektrofahrzeug veranlasst.

12. Verfahren nach einem der vorhergehenden Ansprüche 8 bis 11,
**dadurch gekennzeichnet,**
**dass** in der Steuereinrichtung ebenfalls die Temperatur überwacht wird, analog zu den Ansprüchen 8 bis 11.

13. Verfahren nach einem der vorhergehenden Ansprüche 8 bis 12,
**dadurch gekennzeichnet,**
**dass** als Temperatursensor ein NTC-Widerstand, KTY- oder PTC-Sensor verwendet wird.

14. Verfahren nach einem der vorhergehenden Ansprüche 8 bis 13,
**dadurch gekennzeichnet,**
**dass** bei unterschreiten einer dritten Temperatur eine Aufnahme des Ladevorganges veranlasst wird.
